# EUROPEAN PATENT APPLICATION

(11) **EP 4 472 156 A1**
(43) Date of publication of application: **04.12.2024**
(21) Application number: 23755736.8
(22) Date of filing: 10.02.2023
(51) Int. Cl.: H04L 41/08

(54) **NETWORK SLICE INFORMATION TRANSMISSION METHOD AND APPARATUS**

(30) Priority: 17.02.2022 CN 202210146324; 14.04.2022 CN 202210392808
(71) Applicant: Huawei Technologies Co., Ltd., Shenzhen, Guangdong 518129 (CN)
(72) Inventor: YU, Wei, Shenzhen, Guangdong 518129 (CN); XU, Guoqi, Shenzhen, Guangdong 518129 (CN); DONG, Jie, Shenzhen, Guangdong 518129 (CN); HU, Zhibo, Shenzhen, Guangdong 518129 (CN); CHEN, Dapeng, Shenzhen, Guangdong 518129 (CN)
(74) Representative: Maiwald GmbH
(86) International application number: PCT/CN2023/075383
(87) International publication number: WO 2023/155733

(57) **Abstract**

This application discloses a network slice information transmission method and apparatus. Specifically, a controller performs slice division on a network based on a service requirement and then obtains slice information, and sends the slice information to a first network device in the network by using a path computation element protocol PCEP packet. The PCEP packet includes first slice information corresponding to the first network device. After receiving the PCEP packet, the first network device parses the PCEP packet to obtain the first slice information, and further performs network slice configuration based on the first slice information. That is, in this application, the controller delivers the slice information by using the PCEP packet, so that after obtaining the PCEP packet, the first network device can obtain the first slice information corresponding to the first network device in a timely manner and perform network slice configuration without waiting for a configuration command. Therefore, a network slice configuration rate and slice information delivery performance are improved.

## Description

This application claims priorities to Chinese Patent Application No. 202210146324.0, filed on February 17, 2022 and entitled "NETWORK SLICE INFORMATION DELIVERING METHOD, DEVICE, AND SYSTEM", and to Chinese Patent Application No. 202210392808.3, filed on April 14, 2022 and entitled "NETWORK SLICE INFORMATION TRANSMISSION METHOD AND APPARATUS", both of which are incorporated herein by reference in their entireties.

### TECHNICAL FIELD

This application relates to the field of communication technologies, and in particular, to a network slice information transmission method and apparatus.

### BACKGROUND

Network slicing (Network Slicing) is constructing a plurality of dedicated, virtualized, and isolated logical networks on one general-purpose physical network to meet differentiated requirements of different services for network capabilities. Each logical network is obtained through division based on different service requirements, such as, a delay, bandwidth, security, and the like.

Currently, during network slice division, a controller obtains a network topology managed by the controller, and performs network slice division based on different service requirements, to obtain slice information of each node in a network. The slice information may include slice information of a node, slice information of an interface, traffic direction information, and the like. The slice information of the node indicates a network slice to which the node belongs, the network slice information of the interface indicates a network slice to which the interface belongs, and the traffic direction information indicates a network slice for transmitting or receiving a traffic flow. After obtaining the slice information of each node, the controller sends network slice information of the node to each node by using a network configuration (Network Configuration, Netconf) protocol. The Netconf protocol is a network management protocol based on an extensible markup language (extensible markup language, XML), and provides a programmable method for configuring and managing a network device. In this way, when the controller delivers the network slice information to the node by using the Netconf protocol, the node needs to wait for triggering of a configuration command to learn of specific slice information. Consequently, the node cannot quickly deploy a network slice service. In addition, when a total amount of delivered slice information is large, the node needs to wait for a long period of time to complete configuration work. This affects work efficiency.

### SUMMARY

This application provides a network slice information transmission method and apparatus, to improve network slice information delivery performance and accelerate network slice service deployment.

According to a first aspect of this application, a network slice information transmission method is provided. The method includes: A first network device receives a path computation element protocol (path computation element protocol, PCEP) packet sent by a controller. The PCEP packet includes first slice information corresponding to the first network device. After receiving the PCEP packet, the first network device parses the PCEP packet to obtain the first slice information, and performs network slice configuration based on the first slice information. In this implementation, the controller delivers the slice information by using the PCEP packet, so that after obtaining the PCEP packet, the first network device can obtain the first slice information corresponding to the first network device in a timely manner and perform network slice configuration without waiting for a configuration command. Therefore, a network slice configuration rate and slice information delivery performance are improved.

The PCEP packet may include a plurality of types, for example, a path computation element protocol link state (path computation element protocol-link state, PCEP-LS) packet and a path computation element as a central controller (path computation element as a central controller, PCE-CC) packet.

In a possible implementation, when the PCEP packet is a PCEP-LS packet, the PCEP packet includes link state LS information, and the LS information includes the first slice information. The first slice information may include a plurality of pieces of slice information, for example, node-level slice information, link-level slice information, and prefix-level slice information.

In a possible implementation, the LS information includes a first sub-type-length-value (type-length-value, TLV), the first sub-TLV includes the node-level slice information, and the node-level slice information includes a slice identifier of a network slice to which the first network device belongs.

In a possible implementation, the node-level slice information further includes a flexible algorithm Flex-Algo identifier, and the Flex-Algo identifier indicates an algorithm used by the first network device to compute a transmission path corresponding to the network slice.

In a possible implementation, the LS information includes a second sub-TLU, the second sub-TLV includes the link-level slice information, the link-level slice information includes a slice identifier, and the slice identifier indicates a network slice to which an interface in the first network device belongs.

In a possible implementation, the link-level slice information further includes bandwidth information, and the bandwidth information indicates a bandwidth resource reserved for the network slice.

In a possible implementation, the LS information includes a third sub-TLV, the third sub-TLV includes the prefix-level slice information, the prefix-level slice information includes a slice identifier, and the prefix-level slice information is used to direct traffic matching a prefix to a network slice indicated by the slice identifier.

In a possible implementation, the PCEP packet includes object object information, and the object information includes the first slice information.

In a possible implementation, the object information may include an option option TLV and a slice identifier in the first slice information. The option TLV is used to carry one or more of node information, link information, and prefix information in the first slice information.

In a possible implementation, the option TLV includes a first option TLU, the first option TLV includes the node information, and the node information includes a node identifier.

In a possible implementation, the option TLV includes a second option TLU, the second option TLV includes the link information, and the link information includes an interface identifier.

In a possible implementation, the option TLV includes a third option TLV, and the third option TLV includes the prefix information.

In a possible implementation, the object information further includes a first flag bit and a second flag bit, the first flag bit indicates to update a network slice to which an interface belongs, and the second flag bit indicates an update manner.

In a possible implementation, the object information further includes a flexible algorithm Flex-Algo identifier in the first slice information.

Optionally, when the PCEP packet is a PCE-CC packet, the first slice information may alternatively be carried by newly adding the object information to the PCE-CC packet. For a specific carrying manner, refer to related descriptions of the PCEP-LS packet.

In a possible implementation, the PCEP packet further includes second slice information corresponding to a second network device. The method further includes: The first network device parses the PCEP packet to obtain the second slice information; the first network device generates an interior gateway protocol (interior gateway protocol, IGP) packet based on the second slice information, where the IGP packet includes the second slice information; and the first network device sends the IGP packet to the second network device, to enable the second network device to perform network slice configuration based on the second slice information.

In a possible implementation, the IGP packet includes flexible algorithm definition (flexible algorithm definition, FAD) information, and the FAD information includes the second slice information.

In a possible implementation, the FAD information includes a fourth sub-TLU, and the fourth sub-TLV includes node-level slice information.

In a possible implementation, the FAD information includes a fifth sub-TLV, and the fifth sub-TLV includes link-level slice information. The link-level slice information includes a slice identifier and affinity attribute information, the affinity attribute information is related to an interface, and the interface belongs to a network slice indicated by the slice identifier.

In a possible implementation, the FAD information includes a sixth sub-TLU, and the sixth sub-TLV includes prefix-level slice information.

According to a second aspect, an embodiment of this application provides a network slice information transmission apparatus. The apparatus includes: a receiving unit, configured to receive a path computation element protocol PCEP packet sent by a controller, where the PCEP packet includes first slice information corresponding to a first network device; a parsing unit, configured to parse the PCEP packet to obtain the first slice information; and a configuration unit, configured to perform network slice configuration based on the first slice information.

In a possible implementation, the PCEP packet includes link state LS information, and the LS information includes the first slice information.

In a possible implementation, the LS information includes a first sub-type-length-value TLU, the first sub-TLV includes node-level slice information, and the node-level slice information includes a slice identifier of a network slice to which the first network device belongs.

In a possible implementation, the node-level slice information further includes a flexible algorithm Flex-Algo identifier, and the Flex-Algo identifier indicates an algorithm used by the first network device to compute a transmission path corresponding to the network slice.

In a possible implementation, the LS information includes a second sub-TLV, the second sub-TLV includes link-level slice information, the link-level slice information includes a slice identifier, and the slice identifier indicates a network slice to which an interface in the first network device belongs.

In a possible implementation, the link-level slice information further includes bandwidth information, and the bandwidth information indicates a bandwidth resource reserved for the network slice.

In a possible implementation, the LS information includes a third sub-TLV, the third sub-TLV includes prefix-level slice information, the prefix-level slice information includes a slice identifier, and the prefix-level slice information is used to direct traffic matching a prefix to a network slice indicated by the slice identifier.

In a possible implementation, the PCEP packet includes object object information, and the object information includes the first slice information.

In a possible implementation, the object information includes an option option TLV and a slice identifier in the first slice information, and the option TLV is used to carry one or more of node information, link information, and prefix information in the first slice information.

In a possible implementation, the option TLV includes a first option TLU, the first option TLV includes the node information, and the node information includes a node identifier.

In a possible implementation, the option TLV includes a second option TLU, the second option TLV includes the link information, and the link information includes an interface identifier.

In a possible implementation, the option TLV includes a third option TLV, and the third option TLV includes the prefix information.

In a possible implementation, the object information further includes a first flag bit and a second flag bit, the first flag bit indicates to update a network slice to which an interface belongs, and the second flag bit indicates an update manner.

In a possible implementation, the object information further includes a flexible algorithm Flex-Algo identifier in the first slice information.

In a possible implementation, the PCEP packet further includes second slice information corresponding to a second network device, and the apparatus further includes a generation unit and a sending unit. The parsing unit is further configured to parse the PCEP packet to obtain the second slice information. The generation unit is configured to generate an interior gateway protocol IGP packet based on the second slice information. The IGP packet includes the second slice information. The sending unit is configured to send the IGP packet to the second network device, to enable the second network device to perform network slice configuration based on the second slice information.

In a possible implementation, the IGP packet includes flexible algorithm definition FAD information, and the FAD information includes the second slice information.

In a possible implementation, the FAD information includes a fourth sub-TLU, and the fourth sub-TLV includes node-level slice information.

In a possible implementation, the FAD information includes a fifth sub-TLU, the fifth sub-TLV includes link-level slice information, the link-level slice information includes a slice identifier and affinity attribute information, the affinity attribute information is related to an interface, and the interface belongs to a network slice indicated by the slice identifier.

In a possible implementation, the FAD information includes a sixth sub-TLU, and the sixth sub-TLV includes prefix-level slice information.

According to a third aspect of this application, a network device is provided. The device includes a processor and a memory. The memory is configured to store instructions or program code. The processor is configured to execute the instructions or the program code in the memory, to enable the network device to perform the method according to any one of the first aspect or the possible designs of the first aspect.

According to a fourth aspect of this application, a computer-readable storage medium is provided. The computer-readable storage medium stores instructions. When the instructions are run on a processor, a computer or a network device is enabled to perform the method according to any one of the first aspect or the possible designs of the first aspect.

According to a fifth aspect of this application, a computer program product is provided. The computer program product includes a program. When the program is run on a processor, a computer or a network device is enabled to perform the method according to any one of the first aspect or the possible designs of the first aspect.

According to a sixth aspect of this application, a chip is provided, including an interface circuit and a processor. The interface circuit is connected to the processor, and the processor is configured to enable the chip to perform the method according to any one of the first aspect or the possible designs of the first aspect.

According to the technical solutions provided in this application, the controller performs slice division on the network based on a service requirement and then obtains the slice information, and sends the slice information to the first network device in the network by using the path computation element protocol PCEP packet. The PCEP packet includes the first slice information corresponding to the first network device. After receiving the PCEP packet, the first network device parses the PCEP packet to obtain the first slice information, and further performs network slice configuration based on the first slice information. That is, in this application, the controller delivers the slice information by using the PCEP packet, so that after obtaining the PCEP packet, the first network device can obtain the first slice information corresponding to the first network device in the timely manner and perform network slice configuration without waiting for the configuration command. Therefore, a network slice configuration rate and slice information delivery performance are improved.

### BRIEF DESCRIPTION OF DRAWINGS

To describe the technical solutions in embodiments of this application or in conventional technologies more clearly, the following briefly describes the accompanying drawings for describing embodiments or the conventional technologies. It is clear that the accompanying drawings in the following descriptions show some embodiments of this application, and a person of ordinary skill in the art may still derive other drawings from these accompanying drawings without creative efforts.
FIG. 1 is a diagram of an application scenario according to an embodiment of this application;
FIG. 2 is a flowchart of a network slice information transmission method according to an embodiment of this application;
FIG. 3 is a diagram of a structure of a node attribute sub-TLV according to an embodiment of this application;
FIG. 4 is a diagram of a structure of a link attribute sub-TLV according to an embodiment of this application;
FIG. 5 is a diagram of a structure of a prefix attribute sub-TLV according to an embodiment of this application;
FIG. 6 is a diagram of a structure of object information according to an embodiment of this application;
FIG. 7 is a diagram of a structure of a first option TLV according to an embodiment of this application;
FIG. 8 is a diagram of a structure of a second option TLV according to an embodiment of this application;
FIG. 9 is a diagram of a structure of a third option TLV according to an embodiment of this application;
FIG. 10 is a diagram of another application scenario according to an embodiment of this application;
FIG. 11 is a diagram of a structure of FAD information according to an embodiment of this application;
FIG. 12 is a diagram of a structure of a fourth sub-TLV according to an embodiment of this application;
FIG. 13 is a diagram of a structure of a fifth sub-TLV according to an embodiment of this application;
FIG. 14 is a diagram of a structure of a network slice information transmission apparatus according to an embodiment of this application;
FIG. 15 is a diagram of a structure of a network device according to an embodiment of this application; and
FIG. 16 is a diagram of a structure of another network device according to an embodiment of this application.

### DESCRIPTION OF EMBODIMENTS

To make a person skilled in the art understand the technical solutions in this application better, the following clearly and completely describes the technical solutions in embodiments of this application with reference to the accompanying drawings in embodiments of this application. It is clear that the described embodiments are merely a part rather than all of embodiments of this application.

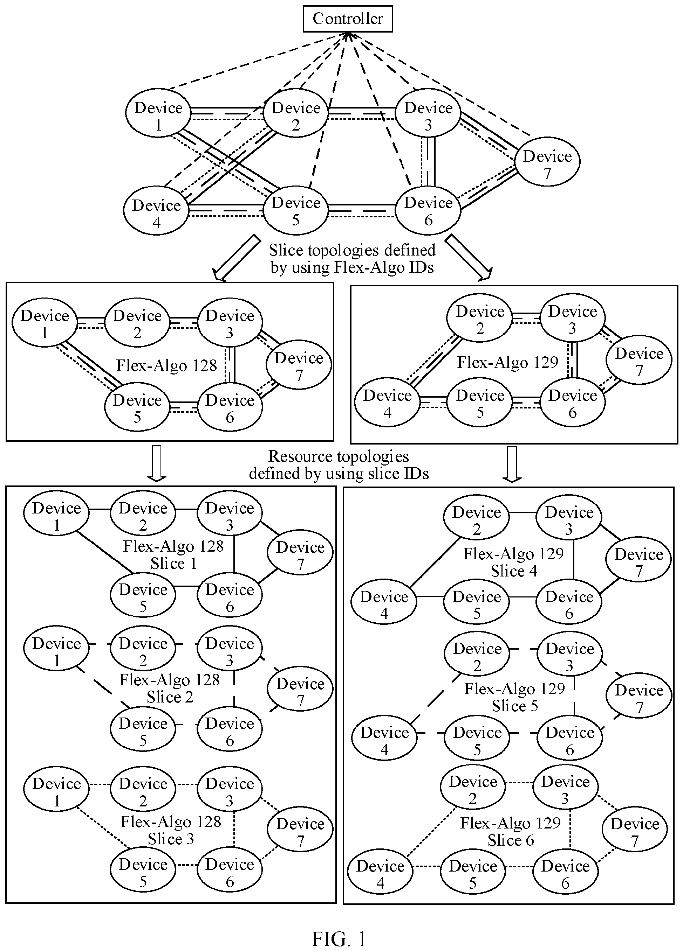

To implement network slice division, network topology division is first performed, and a division granularity may be an entire-network granularity or a topology granularity defined by a network topology identifier. The topology identifier may be any one of the following: a multi-topology identifier (multi-topology identifier, MT ID), a flexible algorithm identifier (flexible algorithm identifier, Flex-Algo ID). Flex-Algo is not one algorithm. A user-defined algorithm range may be Flex-Algo (128) to Flex-Algo (255). There are 128 algorithms in total. Network elements that participate in a same Flex-Algo algorithm form an independent logical topology. For ease of understanding, as shown in FIG. 1, a network is divided into two network topologies based on Flex-Algo 128 and Flex-Algo 129. A network topology obtained through division based on Flex-Algo 128 includes a device 1, a device 2, a device 3, a device 5, a device 6, and a device 7. A network topology obtained through division based on Flex-Algo 129 includes the device 2, the device 3, a device 4, the device 5, the device 6, and the device 7.

In each network topology obtained through division, a plurality of resource topologies may be further generated based on a slice identifier (slice identifier, SID). It should be understood that a physical interface of one device may be divided into a plurality of logical interfaces. Each logical interface may be understood as one network slice, and a corresponding SID is configured on the logical interface. The SID may also be referred to as a slice ID. In other words, one SID may indicate one network slice. As shown in FIG. 1, in the network topology obtained through division based on Flex-Algo 128, three resource topologies are obtained through division based on slice 1 to slice 3. In the network topology obtained through division based on Flex-Algo 129, three resource topologies are obtained through division based on slice 4 to slice 6. It may be understood that a physical interface of the device 1 may be divided into three logical interfaces, and the three logical interfaces respectively belong to slice 1, slice 2, and slice 3. A physical interface of the device 4 may also be divided into three logical interfaces, and the three logical interfaces respectively belong to slice 4, slice 5, and slice 6. A physical interface of the device 2 may be divided into six logical interfaces, and the six logical interfaces respectively belong to slice 1 to slice 6.

Currently, after completing network slice division, a controller delivers slice information to a device by using a Netconf protocol, so that the device performs network slice configuration based on slice information corresponding to the device. Due to limitations of the Netconf protocol, a user cannot quickly deploy a network slice. Especially for a K-level network slice, the controller needs to deliver a large amount of slice information. Efficiency of delivering the slice information by using the Netconf protocol is low, and a delivery speed, a total amount of delivered network slice information per unit time, or the like cannot be met.

Embodiments of this application provide a network slice information transmission method, to resolve a problem that performance of delivering slice information to a network device by using a Netconf protocol is poor. Specifically, a controller establishes a PCEP session with the network device, and delivers slice information to the network device by using a PCEP packet, to improve slice information delivery performance.

PCEP is a protocol based on a transmission control protocol (transmission control protocol, TCP), and is used to define a group of messages and objects, manage a PCEP session, and request and send a path for multi-domain traffic on a traffic engineering label switched path (traffic engineering-label switched path, TE-LSP). The PCEP provides a mechanism in which a path computation element (Path Computation Element, PCE) performs path computation for an external LSP of a path computation client (Path Computation Client, PCC). PCEP interaction includes: the PCC sending an LSP state report to the PCE and PCE updating an external LSP.

The PCE is an entity (a component, an application program, or a network node) that can compute a network path or route based on a network diagram and apply computation constraints. The PCC is any client application program that can request the PCE to perform path computation. The path computation element protocol (PCEP) supports communication between the PCC and the PCE or communication between two PCEs.

For ease of understanding of the technical solutions provided in embodiments of this application, the following provides descriptions with reference to the accompanying drawings.

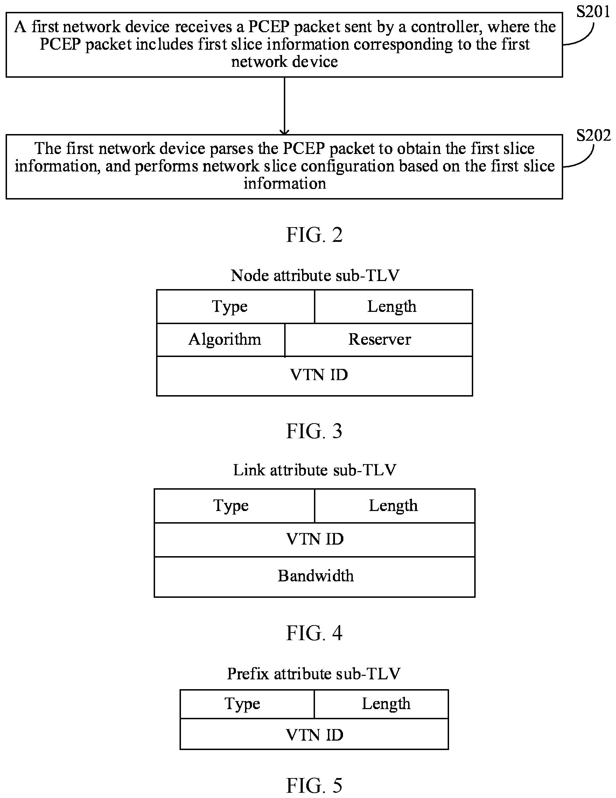

FIG. 2 shows a network slice information transmission method according to an embodiment of this application. As shown in FIG. 2, the method includes the following steps.

S201: A first network device receives a PCEP packet sent by a controller, where the PCEP packet includes first slice information corresponding to the first network device.

In this embodiment, the controller may collect information about an entire network by using IGP or a border gateway protocol link state (Border Gateway Protocol Link State, BGP-LS) protocol, and perform topology division on the current network based on user requirements of third-party requirements, to determine slice information corresponding to each network device in the network. Then, the controller delivers the slice information corresponding to each network device to the corresponding network device based on the PCEP packet. The slice information is used to perform network slice configuration, and may include information such as a slice identifier, an algorithm identifier, a reserved bandwidth resource, and the like. The slice identifier indicates a network slice, and the algorithm identifier indicates an algorithm used by the network device to compute a transmission path corresponding to a network slice.

Specifically, the controller may determine the corresponding first slice information for the first network device in the network based on different service requirements (such as, a delay, bandwidth, security, reliability, and the like). The first slice information may include but is not limited to node-level slice information, link-level network slice information, and prefix-level slice information corresponding to the first network. For example, the node-level slice information may include an identifier (for example, a slice ID) of one or more network slices to which the first network device belongs and a topology identifier (for example, an MT ID or a Flex-Algo ID) corresponding to each network slice. The link-level slice information may include an identifier of each network slice to which an interface in the first network device belongs and needed bandwidth information. The prefix-level slice information may include a slice identifier, where the slice identifier is used to direct traffic matching a prefix to a network slice indicated by the slice identifier.

A plurality of different types of packets such as a PCEP-LS packet, a PCE-CC packet, and the like may be defined in a PCEP protocol. Therefore, the controller may use the foregoing different PCEP packets to carry the first slice information corresponding to the first network device. For ease of understanding different carrying manners, the following separately describes the carrying manners.

In an example, the PCEP packet includes link state (link state, LS) information. The LS information carries the first slice information corresponding to the first network device. In this implementation, the first network device may establish a PCEP session with the controller by using an LS address family.
(1) The slice information is carried by using a newly added virtual transport instance (virtual transport instance identifier, VTN) in the PCEP-LS.

The LS information is new network layer reachability information (network layer reachability information, NLRI), is used to carry information related to a node, a link, and a prefix, and may also be referred to as LS NLRI. For an LS, multiprotocol reach NLRI (multiprotocol reach NLRI, MP_REACH_NLRI) and multiprotocol unreach NLRI (multiprotocol unreach NLRI, MP_UNREACH_NLRI) attributes may be used as containers of the LS NLRI. In other words, the LS NLRI is carried in the PCEP packet as the MP_REACH_NLRI or MP_UNREACH_NLRI attribute.

The LS NLRI may include the following types based on different pieces of carried information: node NLRI (node NLRI), link NLRI (link NLRI), prefix NLRI (prefix NLRI), and the like. The foregoing different pieces of NLRI may further carry corresponding attributes, such as, a node attribute (node attribute), a link attribute (link attribute), and a prefix attribute (prefix attribute). These attributes are represented in a form of a type-length-value (type-length-value, TLV). For example, a node attribute TLV includes node attribute information, a link attribute TLV includes link attribute information, and a prefix attribute TLV includes prefix attribute information. Specifically, the node attribute information indicates a node (a network device) in a topology. The link attribute information indicates information about a link between two nodes, where the information about the link includes interface addresses of the two nodes. The prefix attribute indicates reachable network segment information, where the network segment information may be represented by using a prefix address. The prefix address may be an internet protocol version 4 (internet protocol version 4, IPv4) prefix or an internet protocol version 6 (internet protocol version 6, IPv6) prefix.

Optionally, the node attribute TLV may carry one or more sub-TLVs (sub-TLVs). In this embodiment, a sub-TLV may be newly added to the node attribute TLV The sub-TLV may also be referred to as a node attribute sub-TLU, and is used to carry the node-level slice information. Specifically, the LS information includes a first sub-TLU, and the first sub-TLV includes the node-level slice information. The node-level slice information includes the slice identifier of the network slice to which the first network device belongs. In other words, the first sub-TLV is the node attribute sub-TLV. A format of the node attribute sub-TLV is shown in FIG. 3. The node attribute sub-TLV may include an algorithm (algorithm) field and a virtual transport instance identifier (virtual transport instance identifier, VTN ID) field. The VTN ID field carries the slice identifier of the network slice to which the first network device belongs, and the algorithm field indicates the topology identifier (for example, the MT ID or the Flex-Algo ID) used by the network slice. The Flex-Algo identifier indicates an algorithm used by the first network device to compute a transmission path corresponding to the network slice. Each Flex-Algo algorithm may be represented by Flex-Algo (k). Flex-Algo (k) has local significance only in a logical topology that participates in this algorithm. For example, the first network device is the device 1 in FIG. 1. When computing a transmission path corresponding to slice 1, the device 1 determines the transmission path by using an algorithm indicated by Flex-Algo 128. Alternatively, the first network device is the device 2 in FIG. 1. When computing a transmission path corresponding to slice 1, the device 2 determines the transmission path by using an algorithm indicated by Flex-Algo 128. Alternatively, the first network device is the device 2 in FIG. 1. When computing a transmission path corresponding to slice 4, the device 2 determines the transmission path by using an algorithm indicated by Flex-Algo 129.

When the first network device belongs to a plurality of network slices, a plurality of node attribute sub-TLVs may be newly added to the node attribute TLV. Each node attribute sub-TLV carries a slice identifier of one network slice to which the first network device belongs and a topology identifier used by the network slice. Topology identifiers carried in the plurality of node attribute sub-TLVs may be the same or different. For example, when the first network device is the device 1 in FIG. 1, the first network device corresponds to three node attribute sub-TLVs, and each of topology identifiers carried in the three node attribute sub-TLVs is Flex-Algo 128. When the first network device is the device 2 in FIG. 1, the first network device corresponds to six node attribute sub-TLVs, each of topology identifiers carried in three of the node attribute sub-TLVs is Flex-Algo 128, and each of topology identifiers carried in other three node attribute sub-TLVs is Flex-Algo 129.

It should be noted that the node attribute sub-TLV may alternatively include only a VTN-ID field, and a topology identifier corresponding to the node attribute sub-TLV is a default preconfigured topology identifier.

Optionally, the link attribute TLV may carry one or more sub-TLVs (sub-TLVs). In this embodiment, a sub-TLV may be newly added to the link attribute TLV. The sub-TLV may also be referred to as a link attribute sub-TLV, and is used to carry the link-level slice information. Specifically, the LS information includes a second sub-TLU, the second sub-TLV includes the link-level slice information, the link-level slice information includes the slice identifier, and the slice identifier indicates the network slice to which the interface in the first network device belongs. In other words, the second sub-TLV is the link attribute sub-TLV. A format of the link attribute sub-TLV is shown in FIG. 4. The link attribute sub-TLV may include a VTN ID field and a bandwidth field. The VTN ID field is used to carry the slice identifier of the network slice to which the interface in the first network device belongs, and the bandwidth field indicates a bandwidth resource that needs to be reserved for the network slice. A plurality of channelized sub-interfaces may be configured on one interface in the first network device, and a plurality of network slices may be configured on each channelized sub-interface.

If the first network device may belong to the plurality of network slices, a plurality of link attribute sub-TLVs may be newly added to the link attribute TLV. Each link attribute sub-TLV carries a slice identifier of one network slice to which the first network device belongs and bandwidth that needs to be reserved for the network slice. For example, when a physical interface on the first network device is divided into a plurality of logical interfaces, and different logical interfaces belong to different network slices, one link attribute sub-TLV may be newly added to a link attribute TLV corresponding to a logical interface, and an identifier of a slice to which the logical interface belongs and a bandwidth resource are carried by using the link attribute sub-TLV. Bandwidth resources carried in the plurality of link attribute sub-TLVs may be the same or different. For example, the first network device is the device 1 in FIG. 1. An interface 1 of the device 1 belongs to slice 1, an interface 2 belongs to slice 2, and an interface 3 belongs to slice 3. Total bandwidth corresponding to the device 1 is 500 Mbps. A bandwidth resource corresponding to the interface 1 is 100 Mbps, a bandwidth resource corresponding to the interface 2 is 200 Mbps, and a bandwidth resource corresponding to the interface 3 is 100 Mbps.

It should be noted that the link attribute sub-TLV may alternatively include only a VTN-ID field, and a bandwidth resource corresponding to the link attribute sub-TLV is a default preconfigured bandwidth resource.

Optionally, the prefix attribute TLV may carry one or more sub-TLVs (sub-TLVs). In this embodiment, a sub-TLV may be newly added to the prefix attribute TLV The sub-TLV may also be referred to as a prefix attribute sub-TLU, and is used to carry the prefix-level slice information. Specifically, the LS information includes a third sub-TLU, the third sub-TLV includes the prefix-level slice information, and the prefix-level slice information includes the slice identifier, and is used to direct the traffic matching the prefix to the network slice indicated by the slice identifier. In other words, the prefix-level slice information is used for traffic direction. The third sub-TLV is the prefix attribute sub-TLV. A format of the prefix attribute sub-TLV is shown in FIG. 5. The prefix attribute sub-TLV may include a VTN ID field. The VTN ID field is used to carry a slice identifier of a network slice that traffic corresponding to the IPv4 prefix or the IPv6 prefix needs to pass through. For example, the first network device is the device 1 in FIG. 1, and the device 1 belongs to three network slices: slice 1, slice 2, and slice 3. A correspondence between a prefix 1 and slice 1, a correspondence between a prefix 2 and slice 3, and a correspondence between a prefix 3 and slice 2 are established by using the prefix-level slice information. When a prefix of a traffic flow received by the device 1 is the prefix 2, the traffic flow is directed into slice 3 by using the correspondence, to transmit or receive the traffic flow by using slice 3.

Only a head node of the network slice needs prefix-level slice information. When the head node receives a data packet, the data packet enters a corresponding network slice based on prefix information of the data packet. A forwarded data packet carries slice identifier information. An intermediate node selects, based on a slice identifier carried in the packet, a corresponding slice network for forwarding. For example, in a scenario shown in FIG. 1, in a network topology corresponding to slice 1, the device 1 is a head node, the device 7 is a tail node, and the device 2, the device 3, the device 5, and the device 6 are intermediate nodes. In this case, slice information delivered by the controller to the device 1 includes the prefix-level slice information, and slice information delivered to another device may not include the prefix-level slice information. The head node is the 1^{st} node through which the data packet enters the network slice, the tail node is a last node through which the data packet leaves the network slice, and the intermediate node is an end device located between the head node and the tail node.

The controller may include the node-level slice information, the link-level slice information, and the prefix-level slice information in a same packet or different packets.

(2) The slice information is carried by using a newly added object (object) in the PCER-LS.

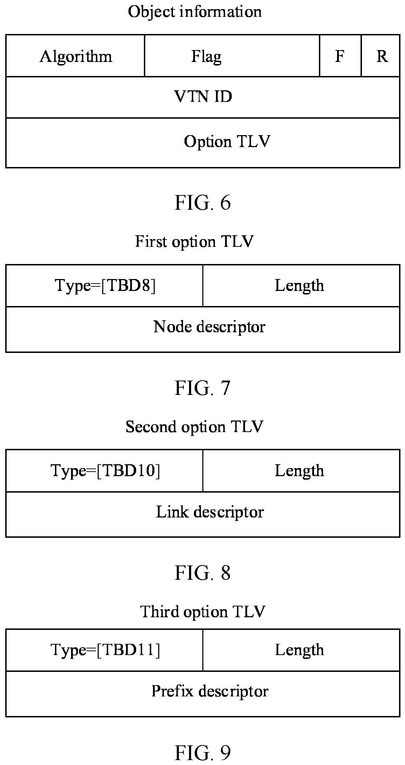

In this embodiment, the PCEP packet may include object information, and the object information includes the first slice information. A format of the object is shown in FIG. 6. The object may include a VTN ID field, an Algorithm field, a flag (Flag) field, and an option (Option) TLV field. The VTN ID field is used to carry the slice identifier of the network slice to which the first network device belongs. The Algorithm field is used to carry a Flex-Algo identifier, indicating an algorithm used by the first network device to compute a transmission path corresponding to the network slice. The flag (Flag) field is used to carry information related to updating a network slice to which an interface belongs. Specifically, the flag field may include a first flag bit R and a second flag bit F. The first flag bit R indicates to update the network slice to which the interface belongs. For example, R indicates to add or delete a network slice to which an interface belongs. The second flag bit F indicates an update manner, for example, full addition or incremental addition, and full deletion or separate deletion.

One or more option TLVs are newly added to the object information to carry node information, link information, or prefix information in the first slice information. Specifically, the option TLV includes a first option TLV. The first option TLV includes the node information, and the node information includes a node identifier. A format of the first option TLV is shown in FIG. 7. The first option TLV includes a Type=[TBD8] field, a Length field, and a Node Descriptor field. Type=[TBD8] indicates that the TLV is a node TLU, and the Node Descriptor field is used to carry specific node information.

Optionally, the option TLV may further include a second option TLV. The second option TLV includes the link information, and the link information includes an interface identifier. A format of the second option TLV is shown in FIG. 8. The second option TLV includes a Type=[TBD10] field, a Length field, and a Link Descriptor field. Type=[TBD10] indicates that the TLV is a link TLU, and the Link Descriptor field is used to carry specific interface information.

Optionally, the option TLV may further include a third option TLV. The third option TLV includes the prefix information, and the prefix information includes a prefix address. A format of the third option TLV is shown in FIG. 9. The third option TLV includes a Type=[TBD11] field, a Length field, and a Prefix Descriptor field. Type=[TBD1 1] indicates that the TLV is a prefix TLV, and the Prefix Descriptor field is used to carry specific prefix information.

In another example, the controller may include the slice information by using the PCE-CC packet, and deliver the slice information to the first network device. When the slice information is delivered in a PCE-CC manner, object information may be newly added to the PCE-CC to carry the slice information. For a format of the object information, refer to FIG. 6. Option TLVs are newly added to the object information to carry slice information of different levels. For formats of the option TLVs, refer to descriptions in FIG. 7 to FIG. 9. Details are not described herein again.

S202: The first network device parses the PCEP packet to obtain the first slice information, and performs network slice configuration based on the first slice information.

After receiving the PCEP packet delivered by the controller, the first network device parses the PCEP packet to obtain the first slice information corresponding to the first network device, and performs network slice configuration based on the first slice information.

That the first network device performs network slice configuration based on the first slice information may include the following actions. On a control plane, the first network device establishes an association relationship between each interface and a slice identifier and an association relationship between a bandwidth resource and the slice identifier based on the first slice information. For example, the first network device is the device 1 in FIG. 1. The device 1 includes three interfaces. The first slice information indicates that a slice identifier corresponding to an interface 1 is slice 1, a slice identifier corresponding to an interface 2 is slice 2, and a slice identifier corresponding to an interface 3 is slice 3. A bandwidth resource reserved for slice 1 is 100 Mbps, a bandwidth resource reserved for slice 2 is 60 Mbps, and a bandwidth resource reserved for slice 3 is 100 Mbps. In this case, interface 1-slice 1-100 Mbps, interface 2-slice 2-60 Mbps, and interface 3-slice 3-100 Mbps are established on the control plane. After establishment of the association relationships on the control plane is completed, the association relationships are delivered from the control plane to a forwarding plane, so that when the first network device receives a traffic flow, on the forwarding plane, a matched network slice is determined based on the association relationships, and then the traffic flow is transmitted or received by using the network slice.

It can be learned that, in this application, the controller delivers the slice information by using the PCEP packet, so that after obtaining the PCEP packet, the first network device can obtain the first slice information corresponding to the first network device in a timely manner and perform network slice configuration without waiting for a configuration command. Therefore, a network slice configuration rate and slice information delivery performance are improved.

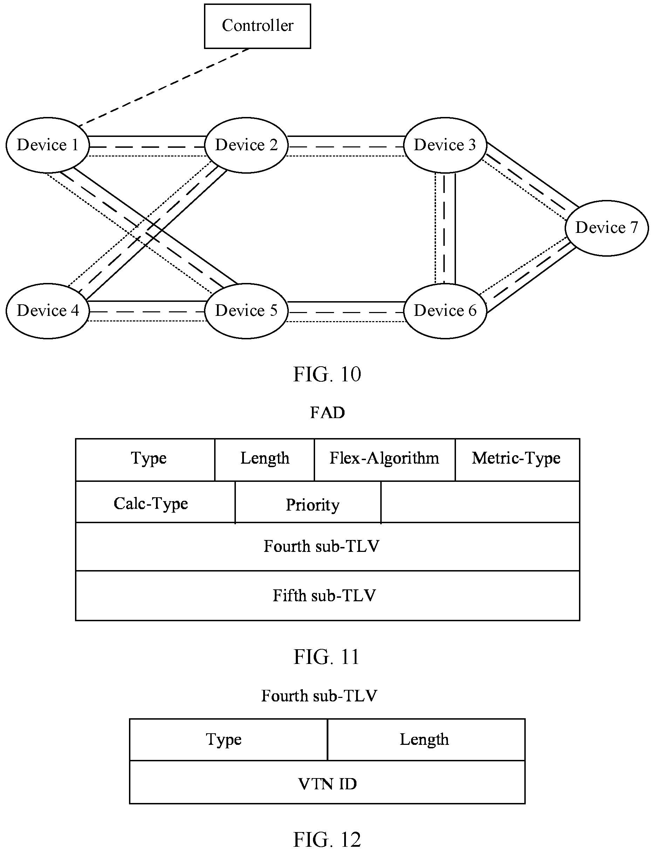

In some application scenarios, a controller may establish a PCEP session with each device in a network. For example, as shown in FIG. 1, the controller establishes a PCEP session with each of the device 1 to the device 7, and separately delivers slice information corresponding to the devices to the devices. In some other application scenarios, a controller establishes a PCEP session with a part of devices in a network. For example, in FIG. 10, a device 1 (corresponding to the foregoing first network device) establishes a PCEP session with the controller. After the controller sends a PCEP packet to the device 1 (corresponding to the foregoing first network device) by using the method shown in FIG. 2, the device 1 floods a device 2 to a device 7 with slice information.

Specifically, the PCEP packet further includes second slice information corresponding to a second network device. The method further includes: The first network device parses the PCEP packet to obtain the second slice information; the first network device generates an interior gateway protocol IGP packet based on the second slice information, where the IGP packet includes the second slice information; and the first network device sends the IGP packet to the second network device, to enable the second network device to perform network slice configuration based on the second slice information. For a specific implementation of performing network slice configuration by the second network device based on the second slice information, refer to related descriptions of performing network slice configuration by the first network device based on the first slice information. Details are not described herein again.

The first network device is the device 1 in FIG. 10, and the second network device may be any one of the device 2 to the device 7 in FIG. 10. The following describes in detail a specific implementation process in which the device 1 floods the device 2 to the device 7 with the slice information. The IGP protocol may run between devices shown in FIG. 10. After obtaining slice information delivered by the controller by using the PCEP packet, the device 1 may convert the slice information into global slice information, and flood other devices (for example, the device 2 to the device 7) with the global slice information by using the IGP.

Optionally, when the first network device receives node-level slice information delivered by the controller, the slice information obtained by the first network device by using the PCEP packet includes a VTN ID and a Flex-Algo ID used by a VTN. The first network device obtains Flex-Algo definition (Flex-Algo definition, FAD) information corresponding to the Flex-Algo ID, to include the second slice information in the FAD information. The VTN ID indicates a slice identifier of a network slice to which the second network device belongs.

Specifically, a sub-TLV may be newly added to the FAD information, and the node-level slice information may be carried by using the sub-TLV. For example, the FAD information includes a fourth sub-TLU, and the fourth sub-TLV includes the node-level slice information. For the node-level slice information, refer to related descriptions in FIG. 2.

Optionally, when the first network device receives link-level slice information delivered by the controller, the slice information obtained by the first network device from the controller by using the PCEP packet includes a VTN ID and bandwidth information corresponding to a VTN. The first network device obtains a corresponding interface by using a link attribute TLU, and converts the link-level slice information into affinity attribute information of a slice interface associated with the VTN and bandwidth information that needs to be reserved for the VTN. The VTN ID indicates a slice identifier of a network slice to which the interface belongs.

Specifically, a sub-TLV may be newly added to the FAD information, and the VTN ID, the affinity attribute information of the slice interface associated with the VTN, and the bandwidth information that needs to be reserved for the VTN may be carried by using the sub-TLV. For example, the FAD information includes a fifth sub-TLV, the fifth sub-TLV includes the link-level slice information, and the link-level slice information includes the slice identifier and the affinity attribute information. The affinity attribute information is related to the interface, and the interface belongs to the network slice indicated by the slice identifier. Alternatively, two sub-TLVs may be newly added to the FAD information, and one sub-TLV is used to carry the VTN ID and the affinity attribute information of the slice interface associated with the VTN. The other sub-TLV is used to carry the VTN ID and the bandwidth information that needs to be reserved for the VTN.

Optionally, the FAD information may further include a sixth sub-TLV, the sixth sub-TLV includes prefix-level slice information, the prefix-level slice information includes a VTN ID, and the VTN ID indicates a slice identifier of a network slice corresponding to a traffic flow matching a prefix.

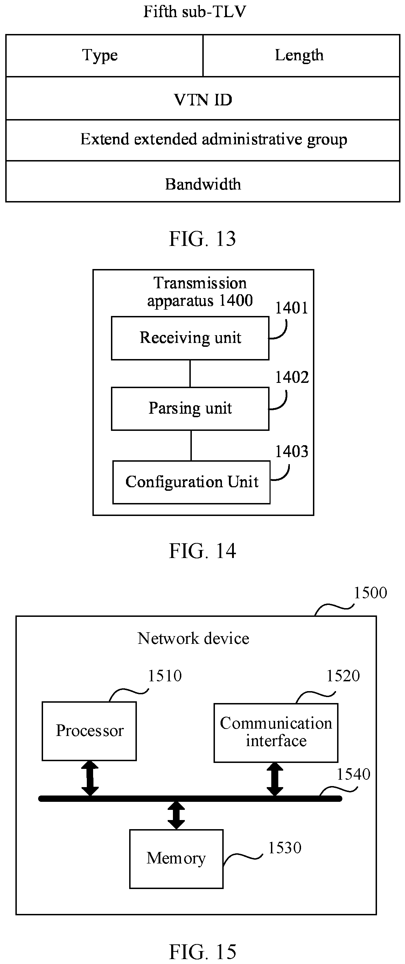

A format of the FAD information is shown in FIG. 11. The FAD information may include a Flex-Algorithm field, a priority (priority) field, a plurality of sub-TLV fields, and the like. The Flex-Algorithm field indicates a Flex-Algo ID used by a VTN, the priority field indicates a priority of the FAD information, and the plurality of sub-TLV fields may include the fourth sub-TLU, the fifth sub-TLV, and the sixth sub-TLV. A format of the fourth sub-TLV is shown in FIG. 12. The sub-TLV includes a VTN ID field, indicating the identifier of the network slice. A format of the fifth sub-TLV is shown in FIG. 13. The sub-TLV includes a VTN ID field, an extend extended administrative group (extend extended administrative group) field, and a bandwidth field. The extend extended administrative group field indicates the affinity attribute information of the slice interface associated with the VTN. In other words, the VTN ID needs to be configured on the interface with an affinity attribute. The bandwidth field indicates bandwidth that needs to be reserved for the VTN.

The first network device may include the global slice information in the FAD information through the conversion, and flood the other devices (for example, the device 2 to the device 7) in the network with the global slice information by using the IGP protocol, for example, intermediate system to intermediate system (intermediate system to intermediate system, ISIS) or open shortest path first (open shortest path first, OSPF). Specifically, the first network device may send an ISIS link state protocol (ISIS link state protocol, ISIS LSP) packet to the other devices in the network. The ISIS LSP packet includes the FAD information. Alternatively, the first network device may send an OSPF link state advertisement (OSPF link state advertisement, OSPF LSA) packet to the other devices in the network. The OSPF LSA packet includes the FAD information.

The other devices (for example, the device 2 to the device 7) in the network may perform network slice configuration after receiving the global slice information carried in the FAD information sent by the first network device. Specifically, for example, the other devices (the device 2 to the device 7) in the network may generate Flex-Algo topology information used by the network slice based on the Flex-Algorithm field in the FAD information. Alternatively, all interfaces that match the affinity attribute on the device may be obtained based on the affinity attribute of the slice interface associated with the VTN (for example, the extend extended administrative group field in the FAD information), the slice identifier is configured on the interface, and a bandwidth resource is reserved, based on the bandwidth field in the FAD information, for the network slice indicated by the slice identifier.

It should be noted that if only one device (for example, the device 1) in the network floods the devices with the FAD information, the other devices may perform network slice configuration based on the global slice information carried in the FAD information. If a plurality of devices in the network separately flood the other devices with the FAD information, the other devices may determine selected FAD information based on a priority field in each piece of FAD information and a same selection criterion, and perform network slice configuration based on global slice information carried in the selected FAD information.

Based on the foregoing method embodiment, an embodiment of this application provides a network slice information transmission apparatus. The following provides descriptions with reference to the accompanying drawings.

FIG. 14 is a diagram of a structure of a network slice information transmission apparatus according to an embodiment of this application. As shown in FIG. 14, the apparatus 1400 can implement a function of the first network device. The apparatus may include a receiving unit 1401, a parsing unit 1402, and a configuration unit 1403.

The receiving unit 1401 is configured to receive a path computation element protocol PCEP packet sent by a controller, where the PCEP packet includes first slice information corresponding to the first network device. For implementation of the receiving unit 1401, refer to related descriptions of S201 in FIG. 2.

The parsing unit 1402 is configured to parse the PCEP packet to obtain the first slice information. For implementation of the parsing unit 1402, refer to related descriptions of S202 in FIG. 2.

The configuration unit 1403 is configured to perform network slice configuration based on the first slice information. For implementation of the parsing unit 1403, refer to related descriptions of S202 in FIG. 2.

In a possible implementation, the PCEP packet includes link state LS information, and the LS information includes the first slice information.

In a possible implementation, the LS information includes a first sub-type-length-value TLV, the first sub-TLV includes node-level slice information, and the node-level slice information includes a slice identifier of a network slice to which the first network device belongs.

In a possible implementation, the node-level slice information further includes a flexible algorithm Flex-Algo identifier, and the Flex-Algo identifier indicates an algorithm used by the first network device to compute a transmission path corresponding to the network slice.

In a possible implementation, the LS information includes a second sub-TLV, the second sub-TLV includes link-level slice information, the link-level slice information includes a slice identifier, and the slice identifier indicates a network slice to which an interface in the first network device belongs.

In a possible implementation, the link-level slice information further includes bandwidth information, and the bandwidth information indicates a bandwidth resource reserved for the network slice.

In a possible implementation, the LS information includes a third sub-TLV, the third sub-TLV includes prefix-level slice information, the prefix-level slice information includes a slice identifier, and the prefix-level slice information is used to direct traffic matching a prefix to a network slice indicated by the slice identifier.

For a format of each of the foregoing sub-TLVs, refer to related descriptions in embodiments shown in FIG. 3 to FIG. 5.

In a possible implementation, the PCEP packet includes object object information, and the object information includes the first slice information.

In a possible implementation, the object information includes an option option TLV and a slice identifier in the first slice information, and the option TLV is used to carry one or more of node information, link information, and prefix information in the first slice information.

In a possible implementation, the option TLV includes a first option TLU, the first option TLV includes the node information, and the node information includes a node identifier.

In a possible implementation, the option TLV includes a second option TLU, the second option TLV includes the link information, and the link information includes an interface identifier.

In a possible implementation, the option TLV includes a third option TLV, and the third option TLV includes the prefix information.

In a possible implementation, the object information further includes a first flag bit and a second flag bit, the first flag bit indicates to update a network slice to which an interface belongs, and the second flag bit indicates an update manner.

In a possible implementation, the object information further includes a flexible algorithm Flex-Algo identifier in the first slice information.

For a format of the object information and each option TLU, refer to related descriptions in the embodiments shown in FIG. 6 to FIG. 9.

In a possible implementation, the PCEP packet further includes second slice information corresponding to a second network device, and the apparatus further includes a generation unit and a sending unit.

The parsing unit is further configured to parse the PCEP packet to obtain the second slice information.

The generation unit is configured to generate an interior gateway protocol IGP packet based on the second slice information, where the IGP packet includes the second slice information.

The sending unit is configured to send the IGP packet to the second network device, to enable the second network device to perform network slice configuration based on the second slice information.

In a possible implementation, the IGP packet includes flexible algorithm definition FAD information, and the FAD information includes the second slice information.

In a possible implementation, the FAD information includes a fourth sub-TLV, and the fourth sub-TLV includes node-level slice information.

In a possible implementation, the FAD information includes a fifth sub-TLU, the fifth sub-TLV includes link-level slice information, the link-level slice information includes a slice identifier and affinity attribute information, the affinity attribute information is related to an interface, and the interface belongs to a network slice indicated by the slice identifier.

In a possible implementation, the FAD information includes a sixth sub-TLU, and the sixth sub-TLV includes prefix-level slice information.

For the FAD information and a format of each of the sub-TLVs, refer to related descriptions in embodiments shown in FIG. 11 to FIG. 13.

It should be noted that, in embodiments of this application, unit division is an example, and is merely logical function division. During actual implementation, another division manner may be used. Functional units in embodiments of this application may be integrated into one processing unit, or each of the units may exist alone physically, or two or more units may be integrated into one unit. For example, in the foregoing embodiment, the processing unit and the sending unit may be a same unit, or may be different units. The integrated unit may be implemented in a form of hardware, or may be implemented in a form of a software function unit.

FIG. 15 is a diagram of a structure of a network device according to an embodiment of this application. The network device may be, for example, the first network device or the second network device in the foregoing method embodiments. Alternatively, the apparatus 1400 in FIG. 14 may be implemented via the device shown in FIG. 15.

Refer to FIG. 15. The network device 1500 includes a processor 1510, a communication interface 1520, and a memory 1530. There may be one or more processors 1510 in a packet forwarding device 1500. In FIG. 15, one processor is used as an example. In this embodiment of this application, the processor 1510, the communication interface 1520, and the memory 1530 may be connected by using a bus system or in another manner. In FIG. 15, for example, a bus system 1540 is used for connection.

The processor 1510 may be a central processing unit (central processing unit, CPU), a network processor (network processor, NP), or a combination of a CPU and an NP. The processor 1510 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), generic array logic (generic array logic, GAL), or any combination thereof.

When the network device is the first network device, the processor 1510 may perform related functions such as parsing the PCEP packet to obtain the first slice information, and performing network slice configuration based on the first slice information in the foregoing method embodiments.

The communication interface 1520 is configured to receive and send packets. Specifically, the communication interface 1520 may include a receiving interface and a sending interface. The receiving interface may be configured to receive a packet, and the sending interface may be configured to send a packet. There may be one or more communication interfaces 1520.

The memory 1530 may include a volatile memory (volatile memory), for example, a random access memory (random access memory, RAM). The memory 1530 may alternatively include a non-volatile memory (non-volatile memory), for example, a flash memory (flash memory), a hard disk drive (hard disk drive, HDD), or a solid-state drive (solid-state drive, SSD). The memory 1530 may alternatively include a combination of the foregoing types of memories. The memory 1530 may store, for example, the user association information mentioned above, and the like.

Optionally, the memory 1530 stores an operating system and a program, an executable module or a data structure, a subset thereof, or an extended set thereof. The program may include various operation instructions for implementing various operations. The operating system may include various system programs, to implement various basic services and process a hardware-based task. The processor 1510 may read the program in the memory 1530, to implement the method provided in embodiments of this application.

The memory 1530 may be a storage device in the network device 1500, or may be a storage apparatus independent of the network device 1500.

The bus system 1540 may be a peripheral component interconnect (peripheral component interconnect, PCI) bus, an extended industry standard architecture (extended industry standard architecture, EISA) bus, or the like. The bus system 1540 may be classified into an address bus, a data bus, a control bus, and the like. For ease of representation, only one thick line is used to represent the bus in FIG. 15, but this does not mean that there is only one bus or only one type of bus.

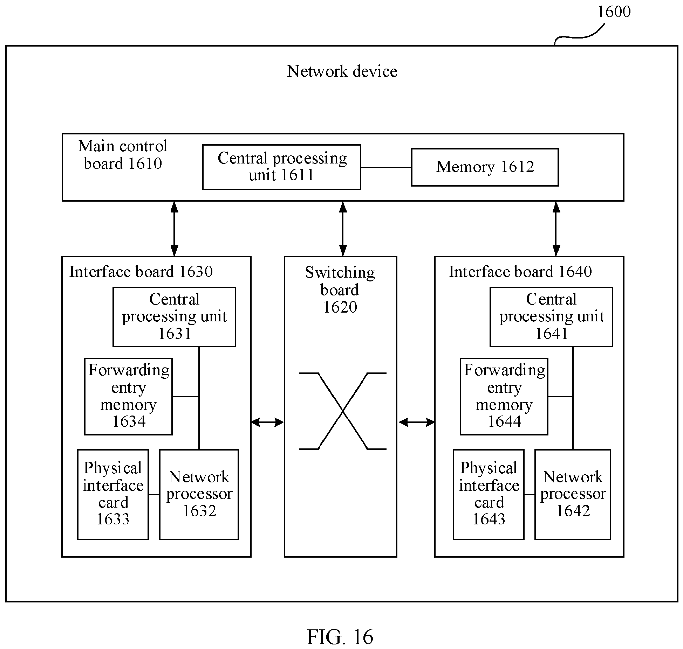

FIG. 16 is a diagram of a structure of another network device 1600 according to an embodiment of this application. The network device 1600 may be configured as the first network device or the second network device in the foregoing embodiments. Alternatively, the transmission apparatus 1400 in FIG. 14 may be implemented via the device shown in FIG. 16.

The network device 1600 includes a main control board 1610 and an interface board 1630.

The main control board 1610 is also referred to as a main processing unit (main processing unit, MPU) or a route processor card (route processor card). The main control board 1610 controls and manages components in the network device 1600, including route computation, device management, device maintenance, and protocol processing functions. The main control board 1610 includes a central processing unit 1611 and a memory 1612.

The interface board 1630 is also referred to as a line interface unit card (line processing unit, LPU), a line card (line card), or a service board. The interface board 1630 is configured to provide various service interfaces and forward a data packet. The service interface includes but is not limited to an Ethernet interface, a POS (Packet over SONET/SDH) interface, and the like. The Ethernet interface is, for example, a flexible Ethernet service interface (flexible Ethernet client, FlexE Client). The interface board 1630 includes: a central processing unit 1631, a network processor 1632, a forwarding entry memory 1634, and a physical interface card (physical interface card, PIC) 1633.

The central processing unit 1631 on the interface board 1630 is configured to control and manage the interface board 1630 and communicate with the central processing unit 1611 on the main control board 1610.

The network processor 1632 is configured to implement packet forwarding processing. A form of the network processor 1632 may be a forwarding chip. Specifically, processing of an uplink packet includes: processing an ingress interface of the packet, and searching a forwarding table. Processing of a downlink packet includes: searching a forwarding table, and the like.

The physical interface card 1633 is configured to implement an interconnection function at a physical layer. Original traffic enters the interface board 1630 from the physical interface card 1633, and a processed packet is sent from the physical interface card 1633. The physical interface card 1633 includes at least one physical interface, and the physical interface is also referred to as a physical port. The physical interface card 1633, also referred to as a subcard, may be installed on the interface board 1630, and is responsible for converting an optical/electrical signal into a packet, performing validity check on the packet, and then forwarding the packet to the network processor 1632 for processing. In some embodiments, the central processing unit 1631 on the interface board 1603 may also implement a function of the network processor 1632, for example, implement software forwarding based on a general-purpose CPU. Therefore, the network processor 1632 is not needed in the physical interface card 1633.

Optionally, the network device 1600 includes a plurality of interface boards. For example, the network device 1600 further includes an interface board 1640. The interface board 1640 includes a central processing unit 1641, a network processor 1642, a forwarding entry memory 1644, and a physical interface card 1643.

Optionally, the network device 1600 further includes a switching board 1620. The switching board 1620 may also be referred to as a switch fabric unit (switch fabric unit, SFU). When the network device has a plurality of interface boards 1630, the switching board 1620 is configured to complete data exchange between the interface boards. For example, the interface board 1630 and the interface board 1640 may communicate with each other via the switching board 1620.

The main control board 1610 is coupled to the interface board 1630. For example, the main control board 1610, the interface board 1630, the interface board 1640, and the switching board 1620 are connected to a system backplane by using a system bus to implement interworking. In a possible implementation, an inter-process communication (inter-process communication, IPC) channel is established between the main control board 1610 and the interface board 1630, and the main control board 1610 and the interface board 1630 communicate with each other through the IPC channel.

Logically, the network device 1600 includes a control plane and a forwarding plane. The control plane includes the main control board 1610 and the central processing unit 1631. The forwarding plane includes components for performing forwarding, such as the forwarding entry memory 1634, the physical interface card 1633, and the network processor 1632. The control plane performs functions such as a function of a router, generating a forwarding table, processing signaling and protocol packets, and configuring and maintaining a status of a device. The control plane delivers the generated forwarding table to the forwarding plane. On the forwarding plane, the network processor 1632 searches the forwarding table delivered by the control plane to forward a packet received by the physical interface card 1633. The forwarding table delivered by the control plane may be stored in the forwarding entry memory 1634. In some embodiments, the control plane and the forwarding plane may be completely separated, and are not on a same device.

It should be understood that the configuration unit 1403 in the transmission apparatus 1400 may be equivalent to the central processing unit 1611 or the central processing unit 1631 in the network device 1600.

It should be understood that, in this embodiment of this application, operations on the interface board 1640 and operations on the interface board 1630 are consistent. For brevity, details are not described again. It should be understood that the network device 1600 in this embodiment may correspond to the first network device or the second network device in the foregoing method embodiments. The main control board 1610, and the interface board 1630 and/or the interface board 1640 in the network device 1600 may implement functions and/or various steps implemented by the first network device or the second network device in the foregoing method embodiments. For brevity, details are not described herein again.

It should be understood that, there may be one or more main control boards. When there are a plurality of main control boards, the main control boards may include an active main control board and a standby main control board. There may be one or more interface boards. A network device having a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may not need a switching board, and an interface board provides a function of processing service data of an entire system. In a distributed forwarding architecture, the network device may have at least one switching board, and data exchange between a plurality of interface boards is implemented via the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained by combining the two central processing units. The device in this form (for example, a network device such as a low-end switch or a router) has a weak data exchange and processing capability. A specific architecture that is to be used depends on a specific networking deployment scenario.

In some possible embodiments, the first network device or the second network device may be implemented as a virtualized device. For example, the virtualized device may be a virtual machine (virtual machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the first network device or the second network device. For example, the first network device or the second network device may be implemented based on a general-purpose physical server in combination with a network functions virtualization (network functions virtualization, NFV) technology. The first network device or the second network device is a virtual host, a virtual router, or a virtual switch. After reading this application, with reference to the NFV technology, a person skilled in the art may virtualize, on the general-purpose physical server, the first network device or the second network device having the foregoing functions. Details are not described herein.

It should be understood that the network devices in the foregoing product forms separately have any function of the first network device or the second network device in the foregoing method embodiments. Details are not described herein.

An embodiment of this application further provides a chip, including a processor and an interface circuit. The interface circuit is configured to receive instructions and transmit the instructions to the processor. The processor may be configured to perform the foregoing method. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), or a programmable logic device (programmable logic device, PLD) or another integrated chip.

An embodiment of this application further provides a computer-readable storage medium, including instructions or a computer program. When the instructions or the computer program is run on a computer, the computer is enabled to perform the network slice information transmission method provided in the foregoing embodiments.

An embodiment of this application further provides a computer program product including instructions or a computer program. When the computer program product runs on a computer, the computer is enabled to perform the network slice information transmission method provided in the foregoing embodiments.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the disclosed system, apparatus, and method may be implemented in another manner. For example, the described apparatus embodiments are merely examples. For example, the unit division is merely logical service division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Apart or all of the units may be selected based on actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to conventional technologies, or all or a part of the technical solutions may be implemented in a form of a software product. The computer software product is stored in a storage medium and includes several instructions for instructing a computer device (which may be a personal computer, a server, a network device, or the like) to perform all or a part of the steps of the method in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium. The communication medium includes any medium that facilitates transmission of a computer program from one place to another. The storage medium may be any available medium accessible to a general-purpose or dedicated computer.

In the foregoing specific implementations, the objectives, technical solutions, and benefits of this application are further described in detail. It should be understood that the foregoing descriptions are merely specific implementations of this application.

The foregoing embodiments are merely intended for describing the technical solutions of this application, but not for limiting this application. Although this application is described in detail with reference to the foregoing embodiments, a person of ordinary skill in the art should understand that modifications to the technical solutions recorded in the foregoing embodiments or equivalent replacements to some technical features thereof may still be made, and such modifications or replacements do not cause the essence of the corresponding technical solutions to depart from the scope of the technical solutions of embodiments of this application.

## Claims

1. A network slice information transmission method, wherein the method comprises:
receiving, by a first network device, a path computation element protocol PCEP packet sent by a controller, wherein the PCEP packet comprises first slice information corresponding to the first network device; and
parsing, by the first network device, the PCEP packet to obtain the first slice information, and performing network slice configuration based on the first slice information.

2. The method according to claim 1, wherein the PCEP packet comprises link state LS information, and the LS information comprises the first slice information.

3. The method according to claim 2, wherein the LS information comprises a first sub-type-length-value TLU, the first sub-TLV comprises node-level slice information, and the node-level slice information comprises a slice identifier of a network slice to which the first network device belongs.

4. The method according to claim 3, wherein the node-level slice information further comprises a flexible algorithm Flex-Algo identifier, and the Flex-Algo identifier indicates an algorithm used by the first network device to compute a transmission path corresponding to the network slice.

5. The method according to any one of claims 2 to 4, wherein the LS information comprises a second sub-TLV, the second sub-TLV comprises link-level slice information, the link-level slice information comprises a slice identifier, and the slice identifier indicates a network slice to which an interface in the first network device belongs.

6. The method according to claim 5, wherein the link-level slice information further comprises bandwidth information, and the bandwidth information indicates a bandwidth resource reserved for the network slice.

7. The method according to any one of claims 2 to 6, wherein the LS information comprises a third sub-TLV, the third sub-TLV comprises prefix-level slice information, the prefix-level slice information comprises a slice identifier, and the prefix-level slice information is used to direct traffic matching a prefix to a network slice indicated by the slice identifier.

8. The method according to claim 1, wherein the PCEP packet comprises object object information, and the object information comprises the first slice information.

9. The method according to claim 8, wherein the object information comprises an option option TLV and a slice identifier in the first slice information, and the option TLV is used to carry one or more of node information, link information, and prefix information in the first slice information.

10. The method according to claim 9, wherein the option TLV comprises a first option TLU, the first option TLV comprises the node information, and the node information comprises a node identifier.

11. The method according to claim 9 or 10, wherein the option TLV comprises a second option TLU, the second option TLV comprises the link information, and the link information comprises an interface identifier.

12. The method according to any one of claims 9 to 11, wherein the option TLV comprises a third option TLV, and the third option TLV comprises the prefix information.

13. The method according to any one of claims 9 to 12, wherein the object information further comprises a first flag bit and a second flag bit, the first flag bit indicates to update a network slice to which an interface belongs, and the second flag bit indicates an update manner.

14. The method according to any one of claims 9 to 13, wherein the object information further comprises a flexible algorithm Flex-Algo identifier in the first slice information.

15. The method according to any one of claims 1 to 14, wherein the PCEP packet further comprises second slice information corresponding to a second network device, and the method further comprises:
parsing, by the first network device, the PCEP packet to obtain the second slice information;
generating, by the first network device, an interior gateway protocol IGP packet based on the second slice information, wherein the IGP packet comprises the second slice information; and
sending, by the first network device, the IGP packet to the second network device, to enable the second network device to perform network slice configuration based on the second slice information.

16. The method according to claim 15, wherein the IGP packet comprises flexible algorithm definition FAD information, and the FAD information comprises the second slice information.

17. The method according to claim 16, wherein the FAD information comprises a fourth sub-TLU, and the fourth sub-TLV comprises node-level slice information.

18. The method according to claim 16 or 17, wherein the FAD information comprises a fifth sub-TLV, the fifth sub-TLV comprises link-level slice information, the link-level slice information comprises a slice identifier and affinity attribute information, the affinity attribute information is related to an interface, and the interface belongs to a network slice indicated by the slice identifier.

19. The method according to any one of claims 16 to 18, wherein the FAD information comprises a sixth sub-TLV, and the sixth sub-TLV comprises prefix-level slice information.

20. A network slice information transmission apparatus, wherein the apparatus comprises:
a receiving unit, configured to receive a path computation element protocol PCEP packet sent by a controller, wherein the PCEP packet comprises first slice information corresponding to the first network device;
a parsing unit, configured to parse the PCEP packet to obtain the first slice information; and
a configuration unit, configured to perform network slice configuration based on the first slice information.

21. The apparatus according to claim 20, wherein the PCEP packet comprises link state LS information, and the LS information comprises the first slice information.

22. The apparatus according to claim 21, wherein the LS information comprises a first sub-type-length-value TLV, the first sub-TLV comprises node-level slice information, and the node-level slice information comprises a slice identifier of a network slice to which the first network device belongs.

23. The apparatus according to claim 22, wherein the node-level slice information further comprises a flexible algorithm Flex-Algo identifier, and the Flex-Algo identifier indicates an algorithm used by the first network device to compute a transmission path corresponding to the network slice.

24. The apparatus according to any one of claims 21 to 23, wherein the LS information comprises a second sub-TLV, the second sub-TLV comprises link-level slice information, the link-level slice information comprises a slice identifier, and the slice identifier indicates a network slice to which an interface in the first network device belongs.

25. The apparatus according to claim 24, wherein the link-level slice information further comprises bandwidth information, and the bandwidth information indicates a bandwidth resource reserved for the network slice.

26. The apparatus according to any one of claims 21 to 25, wherein the LS information comprises a third sub-TLV, the third sub-TLV comprises prefix-level slice information, the prefix-level slice information comprises a slice identifier, and the prefix-level slice information is used to direct traffic matching a prefix to a network slice indicated by the slice identifier.

27. The apparatus according to claim 20, wherein the PCEP packet comprises object object information, and the object information comprises the first slice information.

28. The apparatus according to claim 27, wherein the object information comprises an option option TLV and a slice identifier in the first slice information, and the option TLV is used to carry one or more of node information, link information, and prefix information in the first slice information.

29. The apparatus according to claim 28, wherein the option TLV comprises a first option TLV, the first option TLV comprises the node information, and the node information comprises a node identifier.

30. The apparatus according to claim 28 or 29, wherein the option TLV comprises a second option TLV, the second option TLV comprises the link information, and the link information comprises an interface identifier.

31. The apparatus according to any one of claims 28 to 30, wherein the option TLV comprises a third option TLV, and the third option TLV comprises the prefix information.

32. The apparatus according to any one of claims 28 to 31, wherein the object information further comprises a first flag bit and a second flag bit, the first flag bit indicates to update a network slice to which an interface belongs, and the second flag bit indicates an update manner.

33. The apparatus according to any one of claims 28 to 32, wherein the object information further comprises a flexible algorithm Flex-Algo identifier in the first slice information.

34. The apparatus according to any one of claims 20 to 33, wherein the PCEP packet further comprises second slice information corresponding to a second network device, and the apparatus further comprises a generation unit and a sending unit, wherein
the parsing unit is further configured to parse the PCEP packet to obtain the second slice information;
the generation unit is configured to generate an interior gateway protocol IGP packet based on the second slice information, wherein the IGP packet comprises the second slice information; and
the sending unit is configured to send the IGP packet to the second network device, to enable the second network device to perform network slice configuration based on the second slice information.

35. The apparatus according to claim 34, wherein the IGP packet comprises flexible algorithm definition FAD information, and the FAD information comprises the second slice information.

36. The apparatus according to claim 35, wherein the FAD information comprises a fourth sub-TLV, and the fourth sub-TLV comprises node-level slice information.

37. The apparatus according to claim 35 or 36, wherein the FAD information comprises a fifth sub-TLV, the fifth sub-TLV comprises link-level slice information, the link-level slice information comprises a slice identifier and affinity attribute information, the affinity attribute information is related to an interface, and the interface belongs to a network slice indicated by the slice identifier.

38. The apparatus according to any one of claims 35 to 37, wherein the FAD information comprises a sixth sub-TLV, and the sixth sub-TLV comprises prefix-level slice information.

39. A network device, wherein the network device comprises a processor and a memory, wherein
the memory is configured to store instructions or a computer program; and
the processor is configured to execute the instructions or the computer program in the memory, to enable the network device to perform the method according to any one of claims 1 to 19.

40. A computer-readable storage medium, comprising instructions, wherein when the instructions are run on a computer, the computer is enabled to perform the method according to any one of claims 1 to 19.
